Europäisches Patentamt

(19) European Patent Office

Office européen des brevets

(11) Veröffentlichungsnummer: **0 1 1 3 390**
**B1**

(12) **EUROPÄISCHE PATENTSCHRIFT**

(45) Veröffentlichungstag der Patentschrift:
30.04.86

(21) Anmeldenummer: 83107377.0

(22) Anmeldetag: 27.07.83

(51) Int. Cl.⁴: **F 16 B 25/00**

(54) Selbstschneidende Schnellbauschraube.

(30) Priorität: 10.12.82 DE 3245700

(43) Veröffentlichungstag der Anmeldung:
18.07.84 Patentblatt 84/29

(45) Bekanntmachung des Hinweises auf die Patenterteilung:
30.04.86 Patentblatt 86/18

(84) Benannte Vertragsstaaten:
AT BE CH DE FR GB IT LI NL SE

(56) Entgegenhaltungen:
DE - A - 2 353 375
DE - A - 2 539 365
DE - B - 1 500 798
DE - U - 7 526 601
US - A - 3 982 464

Soviet Inventions Illustrated Week E 07, 31 March 1982
Section Q 61 & SU-A-826973

(73) Patentinhaber: Richter-System GmbH & Co. KG,
Flughafenstrasse 10, D-6103 Griesheim (DE)

(72) Erfinder: Brandt, Horst, Dr.-Ing.,
Albert-Schweitzer-Strasse 3, D-6108 Weiterstadt (DE)
Erfinder: Knell, Willi, Rheinstrasse 54,
D-6087 Büttelborn-Worfelden (DE)

(74) Vertreter: Katscher, Helmut, Dipl.-Ing.,
Bismarckstrasse 29, D-6100 Darmstadt (DE)

## Beschreibung

Die Erfindung betrifft eine selbstschneidende Schnellbauschraube zur Befestigung von Faserplatten an einer Metallunterkonstruktion, mit einem mindestens einen Gewindegang tragenden Schraubenschaft, der in eine mit mindestens einer Schneidkerbe versehene, kegelige Bohrspitze übergeht, und mit zwei nahe dem Schaftende angeordneten, beim Auftreffen auf die Metallunterkonstruktion abbrechbaren Schneidflügeln, von denen mindestens einer bis zum Gewindeaußendurchmesser schneidet.

Zur Befestigung von Mineralfaserplatten und ähnlichen Platten an einer Metallunterkonstruktion, die beispielsweise aus Blechträgern besteht, sind selbstschneidende Bauschrauben gebräuchlich (DE-A-25 39 365), bei denen der Schraubenkern ein zweigängiges Gewinde trägt, dessen einer Gewindegang bis zur kegeligen Schraubenspitze verläuft. Bei Eindringen der Schraubenspitze in die Metallunterkonstruktion beginnt dieser Gewindegang ein Gewinde zu schneiden.

Die Schraubenbohrung in der zu befestigenden Mineralfaserplatte wird ebenfalls durch die Schraubenspitze geformt, wobei der Werkstoff nicht aus der Bohrung entfernt, sondern nur seitlich verdrängt wird. Für Faserplatten, die aus Faserwerkstoffen hoher Festigkeit kompakt gepreßt sind, bereitet die Verwendung dieser bekannten Bauschrauben jedoch Schwierigkeiten, weil der zu verdrängende Werkstoff der Schraube einen hohen Widerstand entgegensetzt, so daß eine verhältnismäßig hohe Axialkraft aufgebracht werden muß, damit die Schnellbauschraube die Faserplatte durchdringen kann. Da die Gewindegänge, die zur Befestigung in der Metallunterkonstruktion vorgesehen sind, hierbei den bereits seitlich verdichteten Faserwerkstoff durchdringen müssen, entsteht ein ausgeformtes Gewinde im verdichteten Faserwerkstoff, so daß eine feste Verbindung zwischen Stahlunterkonstruktion und Faserwerkstoff nicht zustande kommt, zudem entsteht eine erhebliche Reibungskraft, so daß zum Eindrehen der Bauschraube ein sehr hohes Drehmoment aufgewandt werden muß.

Bei Bauschrauben der eingangs genannten Art, die zur Befestigung von Holzplatten auf einer Stahlunterkonstruktion bestimmt sind, ist es bekannt (DE-B-1500 798), am unteren Ende des Schraubenschafts zwei einander gegenüberliegende Schneidflügel anzubringen, die beide im Holz bis zum Außendurchmesser des Gewindes schneiden. Die Schneidflügel erzeugen im Holz eine Bohrung, durch die die Gewindegänge ohne wesentliche Reibung mit dem Holz hindurchtreten können. Beim Auftreffen auf das Metall brechen die beiden Schneidflügel ab. Für die Befestigung von Faserplatten aus Faserwerkstoffen hoher Festigkeit sind diese bekannten Bauschrauben jedoch nicht geeignet, weil auch hierbei die Bohrspitze allein bereits die gesamte Bohrung bis zum Kerndurchmesser des Schraubenschafts herstellen müßte. Außerdem ist beim gleichzeitigen Auftreffen der beiden Schneidflügel auf die Metall unterkonstruktion eine verhältnismäßig große Kraft erforderlich, um die beiden Schneidflügel abzubrechen.

Aufgabe der Erfindung ist es daher, eine Schnellbauschraube der eingangs genannten Art so auszubilden, daß sie auch zur Verwendung bei Faserplatten aus Faserwerkstoffen hoher Festigkeit geeignet ist und daß für das Abbrechen der Schneidflügel nur eine verhältnismäßig geringe Kraft benötigt wird.

Diese Aufgabe wird erfindungsgemäß dadurch gelöst, daß die beiden Schneidflügel axial gegeneinander versetzt sind, dass der vordere Schneidflügel auf der Mantelfläche der kegeligen Borspitze sitzt und bis zum Schraubenkerndurchmesser schneidet, und daß die Bohrspitze einen Kegelwinkel von weniger als 45° aufweist.

Da der vordere Schneidflügel bis zum Schraubenkerndurchmesser schneidet, muß die Bohrspitze den Faserwerkstoff nur bis zu einem Durchmesser verdrängen, der wesentlich kleiner als der Schraubenkerndurchmesser ist. Auch bei einer für das Zerspanen der Faserwerkstoffe weniger geeigneten Schneidengestaltung der Bohrspitze ist daher der Widerstand, der sich der Bohrspitze entgegensetzt, nur verhältnismäßig gering. Die beiden Schneidflügel schneiden nacheinander zunächst bis zu einem Durchmesser, der dem Schrauben-.kerndurchmesser entspricht, und anschließend bis zu einem bis zum Gewindeaußendurchmesser oder darüber hinaus reichenden Durchmesser, so daß das zu zerspanende Volumen angenähert gleichmäßig auf die beiden Schneidflügel verteilt wird.

Da die beiden Schneidflügel axial gegeneinander versetzt sind, treffen sie nacheinander auf die Metallunterkonstruktion auf; das für das Abbrechen der Schneidflügel erforderliche Drehmoment muß daher nicht gleichzeitig für beide Schneidflügel, sondern in zeitlichem Abstand nacheinander für jeweils einen Schneidflügel aufgebracht werden. Die hierfür erforderliche Kraft ist daher geringer.

An dem Zerspanen bzw. Verdrängen des Faserwerkstoffs ist die Bohrspitze nur mit ihrem vorderen, über den vorderen Schneidflügel hinausragenden Abschnitt beteiligt, so daß der Widerstand, der sich der Bohrspitze entgegensetzt, nur gering ist. In den übrigen, sich nach außen anschließenden Durchmesserbereichen übernehmen die beiden Schneidflügel das Zerspanen des Faserwerkstoffs.

In Weiterbildung des Erfindungsgedankens ist vorgesehen, daß axial zwischen dem auf dem Schraubenschaft sitzenden, hinteren Schneidflügel und dem vorderen Schneidflügel ein weiterer, mittlerer Schneidflügel auf der Mantelfläche der kegeligen Bohrspitze angeordet ist. Dadurch ergibt sich eine weitere Aufteilung des zu zerspanenden Faserwerkstoffvolumens auf drei Schneidflügel, so daß die Schneidflügel jeweils verhältnismäßig schwach ausgeführt werden können, so daß auch die zum Abbrechen erforderliche Kraft gering ist.

Zweckmäßigerweise sind die drei Schneidflügel gleichmäßig auf dem Umfang verteilt, damit die auftretenden Schneidkräfte gleichmäßig am Umfang angreifen.

Weitere vorteilhafte Ausgestaltungen des Erfindungsgedankens sind Gegenstand von Unteransprüchen.

Die Erfindung wird nachfolgend an einem Ausführungsbeispiel näher erläutert, das in der Zeichnung dargestellt ist. Es zeigt:

Fig. 1 eine selbstschneidende Schnellbauschraube in einer Seitenansicht,

Fig. 2 einen Schnitt längs der Linie II-II in Fig. 1 und

Fig. 3 einen Schnitt längs der Linie III-III in Fig. 1.

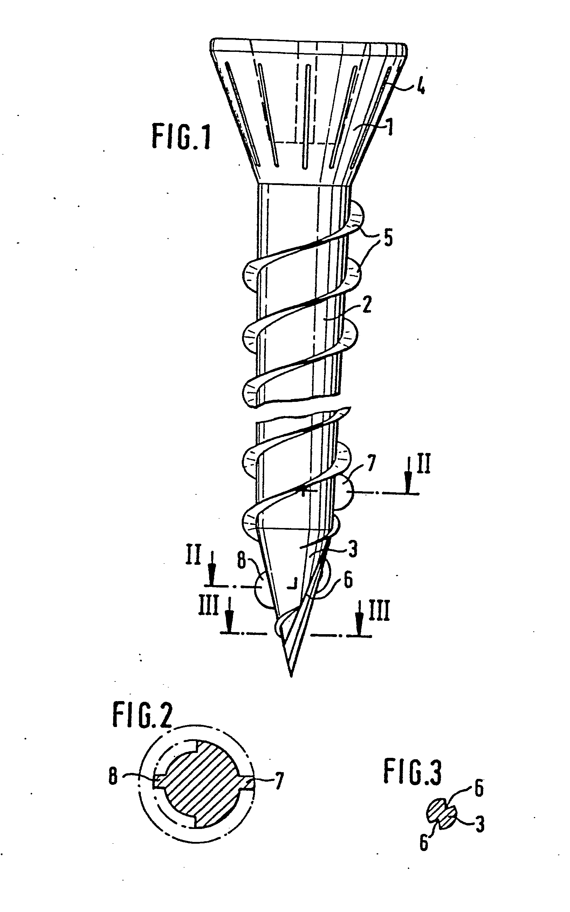

Die dargestellte aus Stahl bestehende Schnellbauschraube weist einen kegelstumpfförmigen Schraubenkopf 1, einen zylindrischen Schraubenschaft 2 und eine kegelige Bohrspitze 3 auf. Der mit einem in Fig. 1 nur angedeuteten Kreuzschlitz versehene Schraubenkopf 1 trägt an seiner Kegelmantelfläche eine Riffelung 4, die das Eindringen des Schraubenkopfs 1 in die zu befestigende Mineralfaserplatte erleichtert.

Auf dem Schraubenschaft 2 befinden sich zwei Gewindegänge 5, die bis zum unteren Ende des Schraubenschafts 2 verlaufen. Die Schraube ist als zweigängige Schraube ausgeführt.

Auf der kegeligen Bohrspitze 3, die mit einem Spitzenwinkel von etwa 30° ausgeführt ist, sind zwei von der Schraubenspitze schräg nach oben verlaufende Schneidkerben 6 eingeschlagen, deren eine Kante eine Schneide bildet. Diese beiden Schneiden werden beim Eindringen der Bohrspitze in die Stahlunterkonstruktion wirksam.

Am unteren Ende des Schraubenkerns 2 ist seitlich ein Schneidflügel 7 angeformt, der mit seiner gekrümmten Außenkante bis zu einem Durchmesser reicht, der dem Gewindeaußendurchmesser der Gewindegänge 5 entspricht oder geringfügig darüber hinausragt. Gegenüber diesem hinteren Schneidflügel 7 ist axial zur Schraubenspitze hin versetzt auf der gegenüberliegenden Schraubenseite ein vorderer Schneidflügel 8 angeformt, der auf der kegeligen Bohrspitze 3 sitzt. Mit seiner gekrümmten Außenkante schneidet der Schneidflügel 8 bis zu einem Durchmesser, der angenähert dem Durchmesser des Schraubenkerns 2 entspricht. Die beiden Schneidflügel 7,8 werden beim Durchdringen der zu befestigenden Mineralfaserplatte wirksam und zerspanen den größeren Volumenanteil der zu bildenden Bohrung, während nur der mittlere, kleinere Volumenanteil der Bohrung durch den vorderen Abschnitt der Bohrspitze 3 gebildet wird, der sich noch vor dem vorderen Schneidflügel 8 befindet. Wenn der vordere Abschnitt der Bohrspitze 3 in die Metallunterkonstruktion eingedrungen ist, bricht der vordere Schneidflügel 8 beim Auftreffen auf das Metall ab. Erst nach einem weiteren Eindringen in das Metall trifft auch der hintere Schneidflügel 7 auf das Metall auf und bricht ab.

In Abwandlung der gezeigten Ausführungsform kann auch vorgesehen sein, daß zwischen dem hinteren Schneidflügel 7 und dem vorderen Schneidflügel 8 ein weiterer, mittlerer Schneidflügel angeordnet ist, der bis zu einem Durchmesser schneidet, der zwischen den Gewindeaußendurchmesser und dem Schraubenkerndurchmesser liegt. Wenn drei Schneidflügel vorgesehen sind, werden diese vorzugsweise gleichmäßig am Umfang der Schrauben verteilt.

Ebenso können anstelle der dargestellten zwei Schneidkerben 6 in der Bohrspitze 3 drei Schneidkerben 6 vorgesehen sein, die gleichmäßig auf den Umfang verteilt sind.

**Patentansprüche:**

1. Selbstschneidende Schnellbauauschraube zur Befestigung von Faserplatten an einer Metallunterkonstruktion, mit einem mindeste s einen Gewindegang (5) tragenden Schraubenschaf (2) der in eine mit mindestens einer Schneidkerbe (6) versehene, kegelige Bohrspitz (3) übergeht, und mit zwei nahe dem Schaftende angeordneten, beim Auftreffen auf die Metallunterkonstruktion abbrechbaren Schneidflügel (7,8), von denen mindestens einer bis zum Gewindeaußendurchmesser schneidet, dadurch gekennzeichnet, daß die beiden Schneidflügel (7,8) axial gegeneinander versetzt sind, daß der vordere Schneidflügel (8) auf der Mantelfläche der kegeligen Bohrspitze (3) sitzt und bis zum Schraubenkerndurchmesser schneidet, und daß die Bohrspitze (3) einen Kegelwinkel von weniger als 45° aufweist.

2. Bauschraube nach Anspruch 1, dadurch gekennzeichnet, daß axial zwishen dem auf dem Schraubenschaft (2) sitzenden, hinteren Schneidflügel (7) und dem vorderen Schneidflügel (8) ein weiterer, mittlerer Schneidflügel auf der Mantelfläche der kegeligen Bohrspitze angeordnet ist.

3.Bauschraube nach Anspruch 2, dadurch gekennzeichnet, daß die drei Schneidflügel gleichmäßig auf den Umfang verteilt sind.

4. Bauschraube nach Anspruch 1, dadurch gekennzeichnet, daß in der kegeligen Bohrspitze (3) zwei einander gegenüberliegende Schneidkerben (6) vorgesehen sind.

5. Bauschraube nach Anspruch 1, dadurch gekennzeichnet, daß in der kegeligen Bohrspitze (3) drei auf den Umfang verteilte Schneidkerben (6) vorgesehen sind.

## Claims

1. Self-cutting rapid construction screw for the fixing of fibre boards on a metal substructure, with a screw shank (2) which carries at least one thread (5) which goes into a tapered drilling point (3) provided with at least one cutting flute (6), and with two cutting vanes (7, 8) arranged near the end of the shank, and which can be broken off when they strike the metal substructure, one at least of which cuts up to the outside diameter of the thread, characterised by the fact that the two cutting vanes (7, 8) are placed axially opposite each other, that the front cutting vane (8) is seated on the surface area of the tapered drilling point (3) and cuts up to the diameter of the body of the screw, and that the drilling point (3) shows a taper angle of less than 45°.

2. Construction screw according to Claim 1, characterised by the fact that, axially between the rear cutting vane (7) seated on the screw shank (2) and the front cutting vane (8), a further, central cutting vane is arranged on the surface area of the tapered drilling point.

3. Construction screw according to Claim 2, characterised by the fact that the three cutting vanes are distributed uniformly on the circumference.

4. Construction screw according to Claim 1, characterised by the fact that two cutting flutes (6) lying opposite each other are provided in the tapered drilling point (3).

5. Construction screw according to Claim 1, characterised by the fact that three cutting flutes (6) distributed on the circumference are provided in the tapered drilling point (3).

## Revendications

1. Vis autotaraudeuse pour construction rapide destinée à la fixation de plaques de fibres a une structure métallique, comportant une tige de vis (2) munie d'au moins une spire de vis (5), qui se termine par une pointe de perçage (3) conique munie d'au moins une entaille de coupe (6), et deux ailettes coupantes (7,8) agencées à proximité de l'extrémité de la tige et qui peuvent être rompues lorsqu'elles viennent en contact avec la structure métallique, au moins l'une de ces ailettes coupant jusqu'au diamètre extérieur du filet, caractérisée en ce que les deux ailettes coupantes (7,8) sont décalées axialement l'une par rapport à l'autre, en ce que l'ailette coupante avant (8) est solidaire de l'enveloppe de la pointe de perçage conique (3) et coupe jusqu'au diamètre du noyau de la vis, et en ce que la pointe de perçage (3) présente un angle de cône inférieur à 45°.

2. Vis pour construction selon la revendication 1 caractérisée en ce qu'une ailette coupante médiane supplémentaire est agencée sur l'enveloppe de la pointe de perçage conique, axialement entre l'ailette coupante arrière (7) solidaire de la tige de vis (2) et l'ailette coupante avant (8).

3. Vis pour construction selon la revendication 2 caractérisée en ce que les trois ailettes coupantes sont uniformément réparties sur la circonférence.

4. Vis pour construction selon la revendication 1 caractérisée en ce que deux entailles de coupe (6) opposées l'une à l'autre sont prévues dans la pointe de perçage conique (3).

5. Vis pour construction selon la revendication 1 caractérisée en ce que trois entailles de coupe (6) réparties sur la circonférence sont prévues dans la pointe de perçage conique (3).

FIG.1

FIG.2

FIG.3